# EUROPEAN PATENT APPLICATION

(11) **EP 3 005 857 A1**
(43) Date of publication of application: **13.04.2016**
(21) Application number: 15188484.8
(22) Date of filing: 06.10.2015
(51) Int. Cl.: A01G 9/24, A01G 9/14

(54) **A GREENHOUSE**

(30) Priority: 07.10.2014 NL 2013585
(71) Applicant: Boal Systemen B.V., 2691 HC 's Gravenzande (NL)
(72) Inventor: VAN HOLSTEIJN, Gerardus Jacobus Maria, 2294 CM Wateringen (NL)
(74) Representative: De Vries & Metman

(57) **Abstract**

A greenhouse (1) comprises a roof structure including a transparent cover supported by a plurality of parallel longitudinal sections (6) and a transparent foil (7) which extends at a distance from the cover (2) below the cover (2). Opposite side edges of the foil (7) are mounted to respective transverse sections (4, 8) which are located at a distance from each other and which are each connected to at least two longitudinal sections (4, 8) and which extend in transverse direction of the longitudinal sections (6). At least one of the transverse sections (8) is displaceable in longitudinal direction of the longitudinal sections (6) so as to be able to change the mutual distance of the transverse sections (4, 8).

## Description

The present invention is related to a greenhouse, such as a greenhouse for cultivating crops, comprising a roof structure including a transparent cover supported by a plurality of substantially parallel longitudinal sections.

A greenhouse including a roof structure with a transparent cover in the form of for example glass panels or window panes is known. The roof structure is often constituted of a metal framework, of which the longitudinal sections or cover bars form a part of. The cover bars may have rabbets in which side edges of the glass panels are received. Preferably, the roof structure is such that the ratio between the surface covered by the glass panels and the surface covered by the metal framework is as large as possible in order to maximize the light incidence in the greenhouse. In order to limit heat losses from the greenhouse to the ambient the glass panels can be made of insulating glass or double glaze, for example. This is relatively expensive and also requires a relatively heavy roof structure.

An object of the present invention is to provide an energy saving greenhouse including a simpler roof structure.

This is achieved with the greenhouse according to the invention, wherein the greenhouse is provided with a transparent foil which extends at a distance from the cover below the cover, wherein opposite side edges of the foil are mounted to respective transverse sections which are located at a distance from each other and which are each connected to at least two longitudinal sections and which extend in transverse direction of the longitudinal sections, wherein at least one of the transverse sections is displaceable with respect to the longitudinal section in longitudinal direction of the longitudinal sections so as to be able to change the mutual distance of the transverse sections.

The advantage of the greenhouse according to the invention is that the transparent foil of which the side edges are mounted to the transverse sections can be stretched. Upon installing the foil it can be attached to the transverse sections without stretch, for example, after which the mutual distance of the transverse sections can be enlarged. A suitable foil is a plastic foil, for example, such as F-CLEAN® foil, which can be applied very well in the greenhouse cultivation due to its good light transparency properties. The F-CLEAN® foil is stretched by 2%, for example, but different percentages are also possible.

The transparent cover may also comprise a foil or an alternative material, but in an alternative embodiment the transparent cover comprises substantially rigid panels, for example glass, preferably single glaze. In case of panels the longitudinal sections may comprise cover bars for supporting the panels.

The distance between the cover and the foil creates an insulated space. Everywhere this distance may be substantially the same, but it may also vary. Because of the presence of the created insulated space it is not necessary to apply insulating glass or double glaze for the cover, but the panels may be made of single glaze or the cover may even be made of a flexible material such as foil. This reduces the costs of the roof structure.

The transverse sections may be parallel and extend perpendicularly on the longitudinal sections, such that the longitudinal sections and the transverse sections constitute a rectangular framework.

In a specific embodiment the roof structure is provided with a gutter section and a ridge which extends parallel thereto and is located higher than the gutter section, and wherein the longitudinal sections extend at least substantially between the gutter section and the ridge in transverse direction of the gutter section and the ridge. Between the gutter section and the ridge the cover has an inclined roof face, such as often seen in case of traditional house-shaped greenhouses including a saddle roof, for example. A greenhouse has often a plurality of saddle roof parts next to each other with intermediate gutter sections. If the distance between the cover and the foil is more or less the same, the foil also extends in an inclined face with respect to the horizontal.

The displaceable transverse section may be located at a distance from the gutter section, whereas the other transverse section has a fixed position at the gutter section. More particularly, the other transverse section may be integrated in the gutter section. Hence, the gutter section may have several functions, including draining rain water, carrying the longitudinal sections and retaining the foil.

Preferably, the displaceable transverse section is located at the lower side of the longitudinal sections, such that the transverse section can extend along more than two longitudinal sections, possibly from an end wall of the greenhouse to an opposite end wall thereof. This provides the possibility of stretching a large piece of foil at once, for example of an entire inclined roof face in case of a saddle roof. Furthermore, it is advantageous if the foil extends below the longitudinal sections, such that the longitudinal sections are not directly in contact with the air in the greenhouse; this could lead to a thermal bridge.

The displaceable transverse section may be slidable via guide tracks which extend in longitudinal direction of the longitudinal sections. Each longitudinal section may have one or more guide tracks.

The longitudinal sections and the displaceable transverse section may be provided with fixation elements which are adapted such that the displaceable transverse section can be locked in at least two different fixed locking positions with respect to the longitudinal sections. For example, the fixation elements may comprise a releasable fixation system and/or may be provided with a snap system. Due to the fixed locking positions the foil can be mounted to the transverse sections without tension or at low tension in a first locking position and subsequently the foil can be stretched simply by displacing the displaceable transverse section towards the second locking position. It is conceivable to have more than two locking positions, for example in order to be able to stretch the foil afterwards.

The fixation elements may be adapted such, that the displaceable transverse section can be displaced easier from one locking position to another locking position than in the other way around. For example, the fixation elements can have an elastic lip and cooperating recesses at the locking positions, wherein the lip is compressed when the displaceable transverse section is displaced with respect to the longitudinal section and rebounds into a recess, wherein the displacement can be continued in the same direction, but not or difficult in opposite direction. This makes stretching of the foil easier when displacement in the direction in which the foil is stretched is easier, and wherein additional actions may be required for a displacement in opposite direction in order to release the locking.

In a particular embodiment the at least two longitudinal sections are provided with respective coupling pieces at the displaceable transverse section which are mounted to the longitudinal sections and slideable in longitudinal direction thereof and which support the displaceable transverse section. The coupling pieces may be made from a flexible material such as spring steel. Due to the resilient character less tension occurs in the roof structure during installing and stretching the foil.

The coupling piece and the transverse section may be slidable with respect to each other in longitudinal direction of the transverse section. This makes mounting of the transverse section to the coupling pieces relatively simple by sliding the coupling pieces and the transverse section into each other.

In a practical embodiment the coupling piece has a U-shaped cross-section, and a bottom and side walls which cooperate with a lower portion of the longitudinal section, wherein inner sides of the side walls are provided with upper guide elements, which are received by guide tracks of the longitudinal section that cooperate with the upper guide elements. In this case the longitudinal section may be block-shaped about which the U-shape fits.

The coupling piece may also be provided with a lower guide element to which the displaceable transverse section is slidably coupled, wherein the coupling piece is slidable in longitudinal direction of the transverse section so as to be able to slide the transverse section and the coupling piece with respect to each other. Upon installing a number of coupling pieces may be mounted to an identical number of longitudinal sections at first, for example, after which the displaceable transverse section is slidably coupled to the coupling pieces via the respective lower guide elements.

The side edges of the foil may be provided with reinforcement rims which are slidably inserted into foil holders of the transverse sections which are located at a distance from each other, which foil holders extend in longitudinal direction of the transverse sections and retain the reinforcement rims in transverse direction, hence in longitudinal direction of the longitudinal section. The foil holders can be slots, for example, which may receive a reinforcement rim in longitudinal direction, but lock it in transverse direction. However, numerous alternatives are possible to attach the foil to the transverse sections. For example, by inserting the reinforcement rims in transverse direction of the foil holders by means of a snap connection.

Preferably, the roof structure is provided with a circulation system for guiding air from a neighbouring space in the greenhouse through the space between the cover and the foil. This makes it possible to guide hot air from the greenhouse through the space between the cover and the foil and to melt snow on the cover. The hot air can be guided through the mentioned space via forced ventilation.

In a practical embodiment the roof structure is provided with a ventilation window which is located beyond the one transverse section, as seen from the other transverse section and which is adapted such, that it provides a ventilation opening in the cover of the greenhouse for ventilating the greenhouse to the ambient air in an open position, and that it closes the ventilation opening to the ambient air and also closes the space between the cover and the foil at the ventilation window from the neighbouring space in the greenhouse in a closed position, and that it connects the space between the cover and the foil at the ventilation window to the neigbouring space in the greenhouse but closes the ventilation opening to the ambient air in an intermediate position. In case of an embodiment including a gutter section and a ridge, wherein the ventilation window is located between the displaceable transverse section and the ridge, the hot air from the greenhouse may flow through passages at the gutter section into the insulated space and flow-out at the ventilation window, for example, or in reverse direction in order to achieve an appropriate flow through the insulation space.

The ventilation window may be provided with a transverse strip which connects the space between the cover and the foil to the adjacent space in the greenhouse in the intermediate position and which transverse strip closes the insulated space from the adjacent space in the closed position, which principle is more or less comparable to a ventilation limiter as described in EP 2 710 887 of the same applicant.

The mentioned sections may be manufactured through extrusion of aluminum. This makes sections with complex shapes possible, such as a gutter section with different functions as described hereinbefore.

The invention will hereafter be elucidated with reference to drawings showing embodiments of the invention schematically.
Fig. 1 is a perspective plan view of a part of an embodiment of a greenhouse according to the invention.
Fig. 2 is cross-sectional view of a part of the roof structure of the embodiment according to Fig. 1 on a larger scale.
Fig. 3 is an enlarged view of a part of Fig. 2, which is indicated therein by III, and also a cross-sectional view along the line III, IV - III, IV in Fig. 5.
Fig. 4 is a similar view as Fig. 3, but shows a different position of a transverse section with respect to a longitudinal section.
Fig. 5 is a cross-sectional view along the line V-V in Fig. 4.
Fig. 6 is a perspective view of a coupling piece of the embodiment of the greenhouse according to Figs. 1-5.
Fig. 7 is a similar view as Fig. 6 and illustrates the manner in which the coupling piece is coupled to the longitudinal section.
Fig. 8 is a similar view as Fig. 6 and illustrates the manner in which the coupling piece is coupled to the transverse section.
Fig. 9 is a similar view as Fig. 3 of an alternative embodiment of a greenhouse.
Figs. 10 and 11 are perspective views of a part of the embodiment according to Fig. 9.

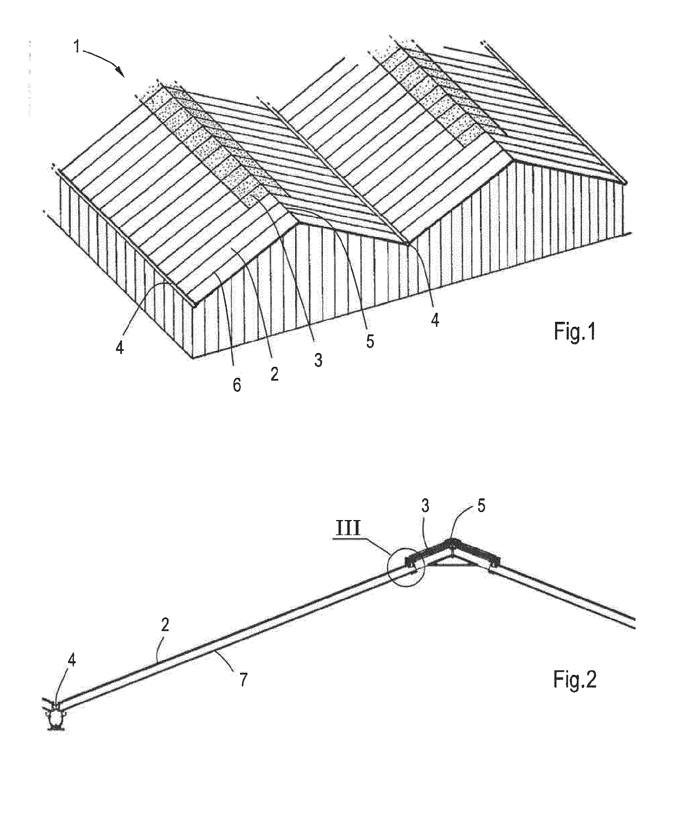

Fig. 1 shows an embodiment of a greenhouse 1 according to the invention. The greenhouse 1 as shown is a greenhouse which is suitable for cultivating greenery products. The greenhouse 1 comprises a roof structure with transparent glass panels 2 in order to receive as much as possible light in the greenhouse 1. The glass panels 2 together form a part of the transparent cover of the roof structure. The embodiment as shown has a classic house shape including two saddle roof parts arranged next to each other, which together constitute four inclined roof faces. In practice, the greenhouse 1 can have a larger number of saddle roof portions arranged next to each other, but a single saddle roof portion is also conceivable.

The greenhouse 1 as shown in Fig. 1 is also provided with ventilation windows 3 at the ridges 5 in order to allow fresh air to enter into the greenhouse 1. At either side of the ridge 5 of a saddle roof part are gutter sections 4, which are supported by uprights (not shown). The gutter sections 4 and the ridges 5 extend parallel in longitudinal direction of the greenhouse 1 between opposite end walls of the greenhouse 1.

In the embodiment according to Fig. 1 the roof structure is provided with parallel longitudinal sections or cover bars 6 for supporting the glass panels 2, which cover bars 6 are located at a distance from each other. In the embodiment as shown a single glass panel 2 is supported by two cover bars 6 which are located next to each other, but it is also possible that a number of glass panels 2 are supported by two cover bars 6 which are located next to each other. The gutter sections 4 and the ridges 5 extend perpendicularly with respect to the cover bars 6.

Lower end portions of the respective cover bars 6 are mounted to the respective gutter sections 4, whereas opposite upper end portions are mounted to respective ridge sections at the ridges 5. The gutter sections 4 have a supporting function in addition to the function of draining water: supporting the cover bars 6. The cover bars 6, gutter sections 4 and ridges 5 together form a metal framework for supporting the cover, in this case the glass panels 2.

Fig. 2 shows a cross-section of a part of the roof structure of the greenhouse 1 at ventilation windows 3. Below the glass panels 2 is a transparent foil 7. The foil 7 extends from the gutter section 4 to the ventilation window 3. The space between the glass panels 2 and the transparent foil 7 has a heat-insulating effect such that the glass panels 2 may be in the form of single glaze.

If snow must be removed from the cover the ventilation window 3 can be put in such a position that the air from the greenhouse can be circulated via the gutter section 4 and an opening which is created by the ventilation window 3 through the space between the glass panels 2 and the transparent foil 7. The hot air from the greenhouse 1 can melt the snow on the glass panels 2. In such a position of the ventilation window 3 there is an open connection between the mentioned insulated space and a neighbouring space in the greenhouse 1, but an open connection with the ambient air is not necessary. For creating a communication with the ambient air for ventilating the greenhouse 1 the ventilation windows can be put in an open position. Alternative manners are anyway available in order to guide hot air from the greenhouse 1 through the mentioned space.

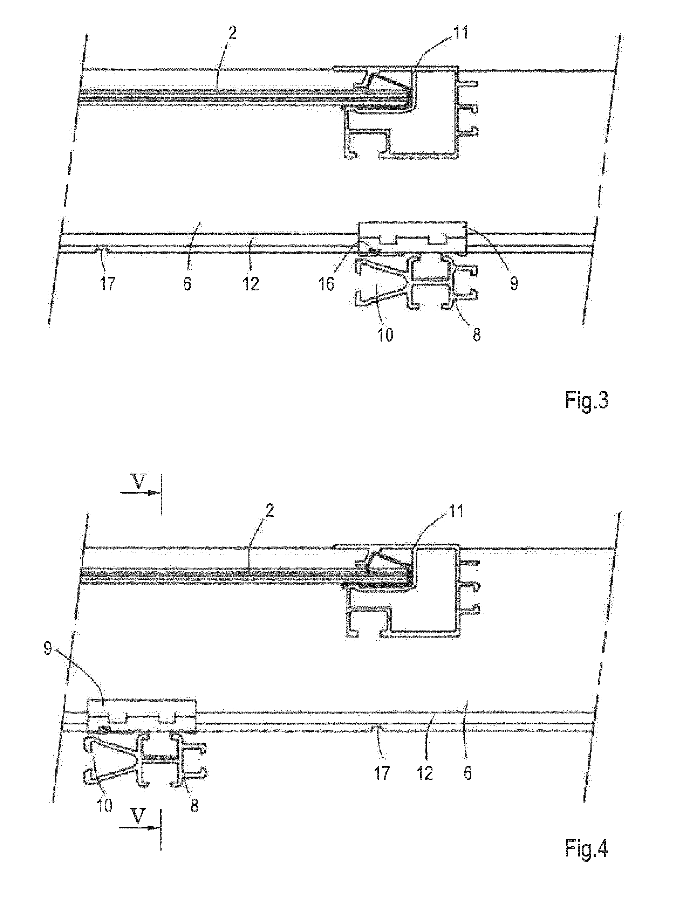

As seen in longitudinal direction of the cover bars 6 opposite side edges of the foil 7 are connected to the gutter section 4 and a transverse section 8, respectively, which transverse section is located at a distance from the gutter section 4. The transverse section 8 and one of the cover bars 6 can be seen in Figs. 3 and 4, in which an enlarged part of Fig. 2 is shown. It is noted that in Fig. 3 and 4 the ventilation window 3 is omitted for clarity reasons. The transverse section 8 extends parallel to the gutter section 4 and is located between the gutter section 4 and the ridge 5 of an inclined roof face. In practice the transverse section 8 as well as the gutter section 4 and the ridge 5 will extend between the opposite end walls of the greenhouse 1. Figs. 3 and 4 further show that the glass panel 2 is also supported by a closure slat 11 which extends perpendicularly to the cover bars 6 between the gutter section 4 and the ridge 5.

The transverse section 8 is mounted to the respective cover bars 6 by means of coupling pieces 9. The transparent foil 7 (not shown in Figs. 3 and 4) is provided with reinforcing rims at the opposite ends thereof. The reinforcing rim at the side of the transverse section 8 is received by a foil holder 10 in the transverse section 8. The foil holder 10 comprises two opposite legs which extend in longitudinal direction of the transverse section 8 and directed to the gutter section 4. At the free ends of these legs are hook-shaped edges which face each other and behind which the reinforcing rim of the foil 7 can be held. In fact the foil holder 10 forms a channel in which the reinforcing rim can be slid in longitudinal direction, but cannot be pulled out in lateral direction.

Although not shown in detail, the gutter section 4 has a comparable foil holder 10 in which an opposite reinforcing rim of the foil 7 can be received slidably. The reinforcing rims of the foil 7 and the respective foil holders 10 are adjusted to each other such that upon building the greenhouse 1 the reinforcing rims can be inserted into the foil holders 10 at respective ends of the foil holders 10, for example at an end wall of the greenhouse 1, and the foil 7 is slid in longitudinal direction of the gutter section 4. The reinforcing rims can be PVC sections, for example, which can be slid in the respective foil holders 10 in longitudinal direction of the transverse section 8 and the gutter section. It is also possible that the side edge of the foil 7 is provided with a double portion and a string therein. The foil 7 may be fixed to the gutter section 4 or the transverse section 8 in a different manner, for example via a snap system wherein the side edges of the foil 7 in transverse direction of the transverse section 8 and the gutter section 4 in the respective foil holders 10 are inserted.

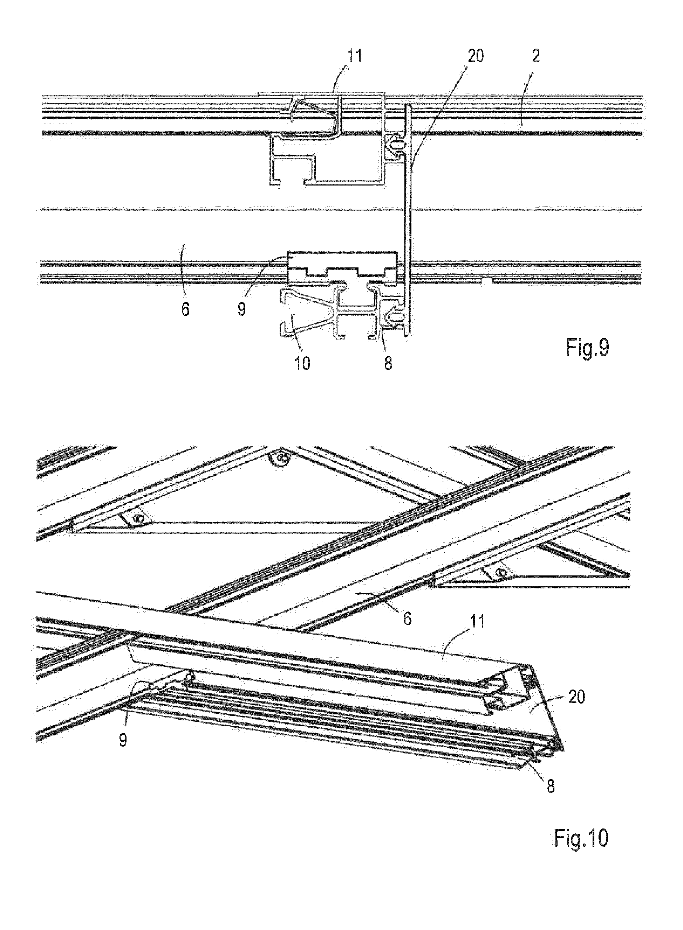

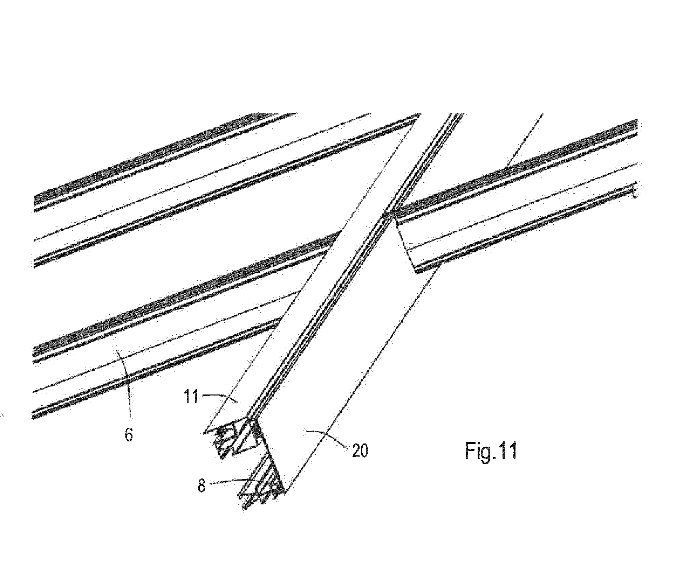

The foil 7 is inserted in the foil holders 10 of the gutter section 4 and the transverse section 9 when the transverse section 8 is in a position as shown in Fig. 4. At that moment the foil is still not stretched. In order to allow as much as possible light into the greenhouse 1 it is important to stretch the transparent foil 7. Therefore, the transverse section 8 can be displaced in the direction of the ridge 5. The position of the transverse section 8 with respect to the cover bar 6 in the situation of the stretched foil 7 is illustrated in Fig. 3. In this position the transverse section 8 is located approximately below the closure slat 11. Thus, the transverse section 8 is displaceable in longitudinal direction of the cover bars 6 and connected to the cover bars 6, such that the mutual distance between the gutter section 4 and the transverse section 2 can be enlarged. In order to close the space between the glass panels 2 and the foil 7 from the remainder of the space in the greenhouse 1, a closure, for example, a rubber strip can be positioned between the upper side of the transverse section 8 and the lower side of the closure slat 11. This is illustrated in an alternative embodiment of the greenhouse 1 according to Figs. 9-11. The rubber strip 20 is snapped into the closure slat 11 and the transverse section 8.

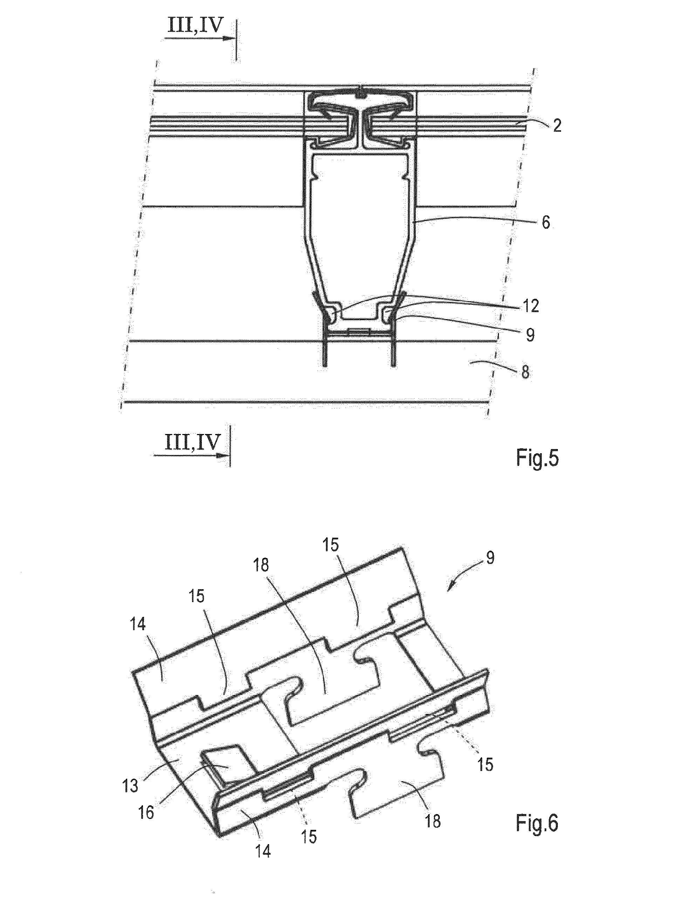

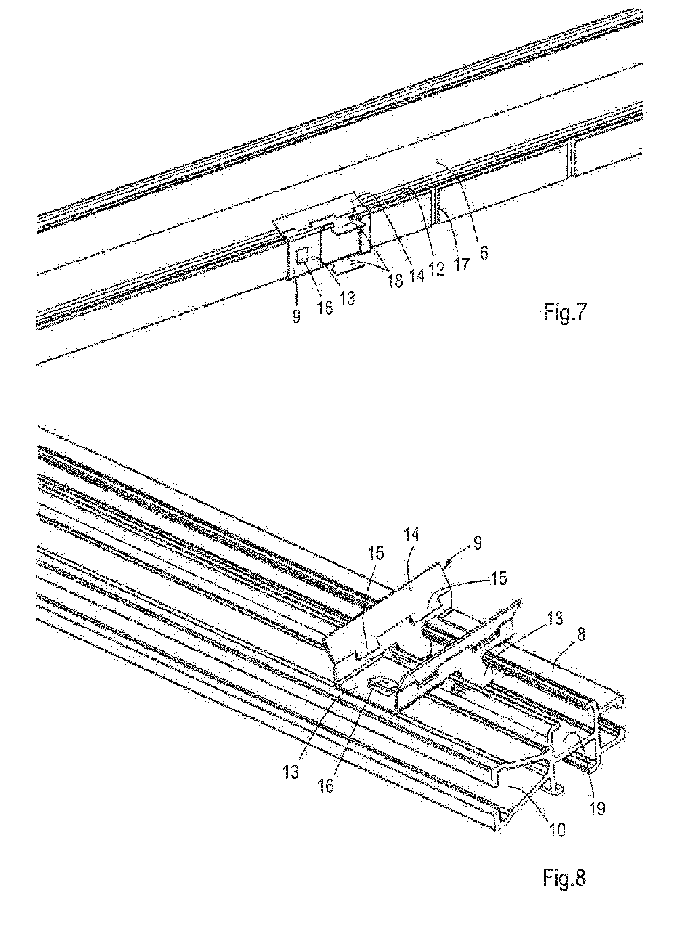

Fig. 5 shows that the transverse section 8 is located below the cover bars 6 and suspends from the cover bars 6 via the coupling piece 9, such that in this case also the foil 7 extends below the cover bars 6. In Fig. 6 the coupling piece 9 is shown separately; Fig. 7 shows how the coupling piece 9 is coupled to the cover bar 6 and Fig. 8 shows how the coupling piece 9 is coupled to the transverse section 8.

In the embodiments of the greenhouse 1 as shown the coupling piece 9 is slidably connected to the cover bar 6 via two guide paths 12 which extend like slots at either side of each cover bar 6 close to the lower side and in longitudinal direction. The coupling piece 9 has a U-shaped cross-section with a bottom 13 and two side walls 14 which extend from the bottom 13. The inner dimensions of the coupling piece 9 are adjusted to the outer dimensions of the cover bar 6, such that the coupling piece 9 at the lower side of the, in this case beam-shaped, cover bar 6 can be slid along the cover bar 6. At the inner side of the side walls 14 are inwardly directed lips 15 which fall in the guide paths 12. In assembled condition the supporting force of the transverse section 8 is transferred on the guide paths 12 of the cover bar 6 via these lips 15. The upper sides of the lips 15 are fixed to the rest of the coupling piece 9 and are resilient, such that the coupling piece 9, upon installing, can be pressed against the lower side of the cover bar 6 and the lips 15 can snap into the guide paths 12. Hence, the coupling piece 9 is clamped to the cover bar 6, but it is still slidable along the cover bar 6. The side walls 14 of the coupling piece 9 and the corresponding portion of the cover bar 6 can possibly have a different shape.

The bottom 13 is provided with an inwardly directed locking lip 16, which serves as fixing element in order to fix the coupling piece 9 with respect to the cover bar 6 in longitudinal direction thereof. Therefore, the lower side of the cover bar 6 is provided with two recesses 17 located at a distance from each other, in which the locking lip 16 fits, see Figs. 3 and 4. In this case there are two locking positions at the cover bar 6, but more or only a single locking position are possible, as well. Due to the orientation and shape of the locking lip 16 as shown in Fig. 6 the coupling piece 9 can be slid from the position as shown in Fig. 4 to the position as shown in Fig. 3, but not or very difficult in reverse direction. This makes a simple action possible for stretching the foil 7. It is also conceivable to apply several recesses 17 along each of the cover bars 6 in order to possibly stretch the foil 7 afterwards.

The coupling piece 9 is made from spring steel. The resilient character is advantageous since when the foil 7 is stretched it is not necessary to slide all coupling pieces 9 along the whole length of the greenhouse 1 simultaneously, but some flexibility is allowable.

Fig. 8 shows how the transverse section 8 and the coupling piece 9 are coupled to each other in the embodiment of the greenhouse 1 as shown in the drawings. The coupling piece 9 is provided with two protrusions 18 which project from the bottom 13 in a direction opposite to the side walls 14 of the coupling piece 9. The protrusions 18 extend substantially parallel to each other and have a narrow portion between the bottom 13 and their free ends as seen in longitudinal direction of the transverse section 8. The relatively wide free ends of the protrusions 18 fall in a guide path 19 of the transverse section 8. Due to the shape of the protrusions 18 and the guide path 19 the coupling piece 9 and the transverse section 8 can be coupled slidingly to each other, such that in the assembled condition of the greenhouse 1 the upper edges of the protrusions 18 at the narrow portion thereof support the transverse section 8. This way of coupling makes building the greenhouse 1 easier. However, there are numerous alternative manners of coupling the coupling piece 9 and the transverse section 9, possibly slidingly.

The lips 15, 16 and the protrusions 18 are made of one piece with the coupling piece 9. The coupling piece 9 can be made of a strip of flat material, via punching, cutting, plastic deformation or the like.

The invention is not limited to the embodiments as shown in the drawings and described hereinbefore which can be varied within the scope of the invention. For example, alternative ways for coupling the transverse section to the cover bars are conceivable. It is also possible, for example, that the ventilation window is located at a different location. Furthermore, it is conceivable to make the cover of a flexible material, for example a transparent foil, instead of glass.

## Claims

1. A greenhouse (1) comprising a roof structure including a transparent cover supported by a plurality of parallel longitudinal sections (6) and a transparent foil (7) which extends at a distance from the cover (2) below the cover (2), wherein opposite side edges of the foil (7) are mounted to respective transverse sections (4, 8) which are located at a distance from each other and which are each connected to at least two longitudinal sections (6) and which extend in transverse direction of the longitudinal sections (6), wherein at least one of the transverse sections (8) is displaceable in longitudinal direction of the longitudinal sections (6) so as to be able to change the mutual distance of the transverse sections (4, 8).

2. A greenhouse (1) according to claim 1, wherein the roof structure is provided with a gutter section (4) and a ridge (5) which extends parallel thereto and is located higher than the gutter section (4), and wherein the longitudinal sections (6) extend at least substantially between the gutter section (4) and the ridge (5) in transverse direction of the gutter section (4) and the ridge (5).

3. A greenhouse (1) according to claim 1 or 2, wherein the displaceable transverse section (8) is located at the lower side of the longitudinal sections (6).

4. A greenhouse (1) according to one of the preceding claims, wherein the displaceable transverse section (8) is slidable via guide tracks (12) which extend in longitudinal direction of the longitudinal sections (6).

5. A greenhouse (1) according to one of the preceding claims, wherein the longitudinal sections (6) and the displaceable transverse section (8) are provided with fixation elements (16, 17) which are adapted such that the displaceable transverse section (8) can be locked in at least two different fixed locking positions with respect to the longitudinal sections (6).

6. A greenhouse (1) according to claim 5, wherein the fixation elements (16, 17) are adapted such, that the displaceable transverse section (8) can be displaced from one position to another position easier than in the other way around.

7. A greenhouse (1) according to one of the preceding claims, wherein the at least two longitudinal sections (6) at the displaceable transverse section (8) are provided with respective coupling pieces (9) which are mounted to the longitudinal sections (6) and slideable in longitudinal direction thereof and which support the displaceable transverse section (8).

8. A greenhouse (1) according to claim 7, wherein the coupling piece (9) and the transverse section (8) are slidable with respect to each other in longitudinal direction of the transverse section (6).

9. A greenhouse (1) according to claim 7 or 8, wherein the coupling piece (9) has a U-shaped cross-section, and a bottom (13) and side walls (14) which cooperate with a lower portion of the longitudinal section (6), wherein inner sides of the side walls (14) are provided with upper guide elements (15), which are received by guide tracks (12) of the longitudinal section (6) that cooperate with the upper guide elements (15).

10. A greenhouse (1) according to one of the claims 7-9, wherein the coupling piece (9) is provided with a lower guide element (18) to which the displaceable transverse section (8) is slidably coupled and slidable in longitudinal direction of the transverse section (8).

11. A greenhouse (1) according to one of the preceding claims, wherein the transparant cover comprises substantially rigid panels (2) and the longitudinal sections comprise cover bars (6) which support the rigid panels (2), wherein the rigid panels (2) are preferably made of glass, and more preferably made of single glaze.

12. A greenhouse (1) according to one of the preceding claims and claim 2, wherein the displaceable transverse section (8) is located at a distance from the gutter section (4), whereas the other transverse section has a fixed position at the gutter section (4).

13. A greenhouse (1) according to claim 12, wherein the other transverse section is integrated in the gutter section (4).

14. A greenhouse (1) according to one of the preceding claims, wherein the side edges of the foil (7) are provided with reinforcement rims which are inserted into foil holders (10) of the transverse sections (4, 8) which are located at a distance from each other, which foil holders (10) extend in longitudinal direction of the transverse sections (4, 8) and retain the reinforcement rims in transverse direction, wherein the reinforcement rims are inserted slidably in longitudinal direction of the foil holders (10) or are inserted in transverse direction of the foil holders (10) by means of a snap connection.

15. A greenhouse (1) according to one of the preceding claims, wherein the roof structure is provided with a circulation system for guiding air from a neighbouring space in the greenhouse (1) through the space between the cover (2) and the foil (7).

16. A greenhouse (1) according to claim 15, wherein the roof structure is provided with a ventilation window (3) which is located beyond the one transverse section (8), as seen from the other transverse section (4) and which is adapted such, that it provides a ventilation opening in the cover of the greenhouse (1) for ventilating the greenhouse (1) to the ambient air in an open position, and that it closes the ventilation opening to the ambient air and also closes the space between the cover (2) and the foil (7) at the ventilation window (3) in a closed position, and that it connects the space between the cover (2) and the foil (7) at the ventilation window (3) to the neigbouring space in the greenhouse (1) but closes the ventilation opening to the ambient air in an intermediate position.

17. A greenhouse (1) according to one of the preceding claims, wherein the transparent cover also comprises a foil.
